# FASCICULE DE BREVET EUROPEEN

(11) **EP 1 719 642 B1**
(45) Date de publication et mention de la délivrance du brevet: **03.12.2008**
(21) Numéro de dépôt: 06112180.2
(22) Date de dépôt: 03.04.2006
(51) Int. Cl.: B60C 9/08, B29D 30/30

(54) **Pneumatique et procédé de fabrication**
Luftreifen und Herstellungsverfahren
Pneumatic tyre and manufacturing process

(30) Priorité: 02.05.2005 FR 0504466
(43) Date de publication de la demande: 08.11.2006
(73) Titulaire: Société de Technologie Michelin, 63000 Clermont-Ferrand (FR); Michelin Recherche et Technique S.A., 1763 Granges-Paccot (CH)
(72) Inventeur: Vialle, Jean-Yves, 63200 Riom (FR)
(74) Mandataire: Bauvir, Jacques

(56) Documents cités:
- EP-A- 0 120 623
- EP-A- 0 407 134
- FR-A- 2 745 754
- US-A- 4 226 654

## Description

### Domaine de l'invention

La présente invention concerne les pneumatiques et les méthodes de fabrication de pneumatiques, et plus particulièrement l'amélioration de l'apparence et de la performance d'un flanc de pneumatique.

### Définitions

Par « renfort » ou « élément de renforcement », on entend aussi bien des fils que des câbles. Un fil peut être constitué par un fil unique monofilamentaire ou multifilamentaire ; un câble peut être pourvu d'une âme centrale ou non. Le matériau constituant les éléments de renfort peut être variable, il peut être métallique ou en textile naturel ou synthétique.

Par direction « radiale », on entend toute direction comprise dans un plan comprenant l'axe de rotation du pneumatique. Un point est « radialement intérieur » à un autre s'il se trouve plus près de l'axe de rotation du pneumatique. Une coupe est dite « radiale » lorsqu'elle est faite selon un plan comprenant l'axe de rotation du pneumatique.

Par « direction axiale », on entend une direction parallèle à l'axe de rotation du pneumatique.

Par « direction circonférentielle », on entend une direction perpendiculaire aux directions radiale et axiale.

### Arrière-plan technologique

Malgré l'évolution rapide que les procédés de fabrication (et notamment les méthodes de confection sur noyau rigide) ont connu ces dernières années, la plupart des pneumatiques sont aujourd'hui encore confectionnés sur tambour. Dans ce type de procédé, l'armature de carcasse, formée d'une ou de plusieurs nappes est posée sur un tambour cylindrique de façon à ce que ses éléments de renfort soient orientés dans une direction sensiblement parallèle à l'axe du tambour. L'armature de carcasse ayant été enroulée autour du tambour, ses extrémités sont assemblées de façon à ce que l'armature forme un cylindre dont le diamètre intérieur correspond au diamètre du tambour. L'assemblage des extrémités se fait au moyen d'une zone de jonction permettant de relier les deux bords de l'armature.

Deux types de jonction sont couramment employés : la jonction dite à recouvrement et la jonction dite bout à bout.

Dans la jonction bout à bout des bords d'une nappe, la liaison des bords de nappe repose sur l'adhésivité de petites portions de composition caoutchouteuse enrobant les éléments de renfort. La zone de jonction est donc peu robuste et peut se dégrader lors de la transformation de l'ébauche cylindrique de l'armature en ébauche toroïdale lors de la conformation ultérieure du bandage, notamment dans les zones de plus grand développement circonférentiel.

Il a été proposé depuis longtemps de renforcer la zone de jonction bout à bout par l'application d'un petite couche de gomme, localisée dans la proximité de la zone. Ainsi, le document US 1 899 067 suggère de poser une feuille de gomme collante sur les bords de l'armature de carcasse et d'appliquer de la chaleur et de la pression pour 'souder' la zone. Le document EP 0 120 623 présente une variante plus récente de la même approche. FR 2 389 483 propose de remplacer la gomme par une bande de recouvrement renforcée dont les renforts sont orientés à peu près le long d'une circonférence du cylindre formé par l'armature de carcasse. Le document DE 2 504 181 poursuit cette logique en proposant l'utilisation d'une bande pré-tendue, ce qui permet de donner davantage de résistance à la zone pendant la transformation de l'ébauche cylindrique de l'armature en ébauche toroïdale, et d'éviter la formation de zones de forte épaisseur (balourd).

Comme son nom indique, la jonction à recouvrement consiste à recouvrir, sur une certaine distance, un bord d'une nappe de l'armature de carcasse par l'autre bord et à assurer la liaison par l'application d'une pression. Ce type de jonction est plus particulièrement employé lorsque le tissu est renforcé par des fils ou câbles textiles. Il présente une grande solidité, due à la grande surface d'adhésion entre les parties de recouvrement.

Présentant une double épaisseur de tissu sur une certaine distance circonférentielle, cette jonction n'est cependant pas sans inconvénients. Le nombre d'éléments de renforcements est doublé sur la zone de jonction ; sous l'effet de la pression de gonflage, l'allongement des éléments de renforcement de la zone est donc deux fois moindre comparativement à l'allongement de tous les autres éléments de renforcement de l'armature. Il en résulte un manque d'uniformité des flancs du pneumatique, qui peut avoir une influence sur les performances du pneumatique ou à tout le moins sur son aspect esthétique.

Plusieurs solutions ont été proposées : EP 0 407 134 divulgue l'utilisation d'une bande de recouvrement en gomme pour couvrir la totalité ou une partie de la zone de jonction. US 4 810 317 enseigne l'emploi d'une bande renforcée recouvrant la totalité de la zone de jonction, les éléments de renfort de la bande étant disposés préférentiellement à un angle de 10 à 25 degrés par rapport aux éléments de renfort de l'armature de carcasse.

Ces solutions ne permettent pas toujours une réduction satisfaisante de l'irrégularité du flanc. Elles ont également l'inconvénient de nécessiter l'ajout d'une quantité relativement importante de gomme ou de tissu caoutchouté et d'augmenter le balourd du pneumatique. L'ajout d'une bande renforcée recouvrant la totalité de la zone de jonction peut même avoir un effet contraire au but recherché, car cette bande peut agir comme un renforcement de la nappe carcasse dans la zone de jonction, aggravant ainsi la déformation du flanc lorsque le pneumatique est gonflé.

D'autres solutions ont été proposées. Il a notamment été suggéré de couper les éléments de renfort dans la partie de la nappe où il y a superposition. Cette solution permet effectivement de réduire la zone de plus grande résistance à l'allongement, mais elle représente une opération délicate et comporte le risque que trop d'éléments soient coupés et que des zones de fragilité soient ainsi formées.

Il a également été proposé de prévoir une armature de carcasse comportant des éléments renforçants de moindre résistance à l'allongement dans la zone de jonction. Cette solution constitue une solution au problème de la déformation du flanc, mais sa mise en oeuvre est coûteuse et difficile sur le plan industriel.

Le premier objectif de la présente invention est de résoudre le problème de l'irrégularité du flanc par des moyens simples et dont la mise en oeuvre industrielle est peu onéreuse.

### Résumé de l'invention

Cet objectif est atteint par un pneumatique comprenant
- des bourrelets contenant chacun au moins une structure de renforcement circonférentiel ;
- un sommet comprenant une structure de renforcement surmontée radialement vers l'extérieur par une bande de roulement ;
- de part et d'autre du sommet, un flanc assurant la liaison avec chaque bourrelet ;
- au moins une armature de carcasse s'étendant d'un bourrelet à l'autre, en passant par le sommet, et ancrée à au moins une structure de renforcement circonférentiel dans chaque bourrelet, l'armature de carcasse étant constituée d'au moins une nappe caoutchoutée comprenant des renforts s'étendant sensiblement radialement, c'est-à-dire faisant un angle compris entre 80° et 100° avec la direction circonférentielle ;
- au moins une zone de jonction par superposition de la nappe sur elle-même, cette zone étant orientée sensiblement radialement ;
- au moins une bande de recouvrement couvrant une partie d'une zone de jonction, chaque bande de recouvrement étant constituée d'une composition caoutchoutique renforcée par une pluralité de renforts ;
- les renforts de chaque bande de recouvrement ayant une orientation sensiblement radiale ;
le pneumatique étant caractérisé en ce que, vue en coupe radiale, chaque bande de recouvrement s'étend entre
- un point à proximité de l'extrémité axiale de la structure de renforcement du sommet et
- un point situé radialement à l'intérieur du point axialement le plus à l'extérieur du pneumatique.

Si la longueur L désigne la distance, dans un plan radial, entre (i) le point radialement le plus à l'intérieur de la section de la structure de renforcement circonférentiel dans un bourrelet et (ii) l'extrémité axiale de la structure de renforcement du sommet, cette distance étant mesurée le long de la surface de l'armature de carcasse, la bande de recouvrement s'étend de préférence d'un point situé à une distance D de la structure de renforcement circonférentiel jusqu'à l'extrémité axiale de la structure de renforcement du sommet. La distance D se situe entre 0.3.L et 0.7.L, et de préférence à 0.4.L. La valeur précise peut être choisie en fonction des déformations visibles sur des pneumatiques surgonflés (typiquement à 3 bar). De préférence, on choisit une longueur de la bande de recouvrement telle que celle-ci ne soit pas en contact avec la structure de renforcement du sommet mais s'arrête à une distance inférieure à 0.1·L de l'extrémité axiale de la structure de renforcement du sommet. Ainsi on peut éviter tout contact entre la bande de recouvrement et la structure de renforcement du sommet, même en tenant compte des tolérances de fabrication.

Il a été constaté que la réduction de la déformation du flanc dépend de la largeur de la bande de recouvrement, par rapport à la largeur de la zone de jonction. Préférentiellement, la largeur de chaque bande de recouvrement, mesurée dans la direction circonférentielle, est supérieure à la largeur de la zone de jonction dans le bourrelet (où la zone de jonction n'est pas modifiée lors de la conformation du pneumatique). La réduction de la déformation du flanc est particulièrement satisfaisante lorsque la largeur de chaque bande de recouvrement, mesurée dans la direction circonférentielle, est supérieure à la largeur la plus grande de la zone de jonction dans sa partie couverte par ladite bande de recouvrement. Bien évidemment, la largeur de chaque bande de recouvrement ne doit pas dépasser une certaine limite, sous peine de provoquer à son tour une déformation du flanc. Préférentiellement, la largeur de chaque bande mesurée dans la direction circonférentielle, est inférieure à quatre fois, et encore plus préférentiellement inférieure à deux fois, la largeur la plus grande de la zone de jonction dans sa partie couverte par la bande de recouvrement.

De façon préférentielle, chaque bande de recouvrement est centrée, dans la direction circonférentielle, autour de la zone de jonction.

L'épaisseur de chaque bande de recouvrement, mesurée sur pneu moulé, dans une direction perpendiculaire à la surface de l'armature de carcasse, est comprise entre 0.6 et 1.5 mm.

Une bande de recouvrement peut avoir la même constitution qu'une nappe de l'armature de carcasse ou une constitution différente. A titre d'exemple, on a utilisé avec succès une bande de renforcement comportant des renforts en nylon sur une armature de carcasse constitué de renforts en polyester.

L'invention concerne également un procédé de fabrication d'un pneumatique sur un tambour, le pneumatique comprenant :
- des bourrelets contenant chacun au moins une structure de renforcement circonférentiel ;
- un sommet comprenant une structure de renforcement surmontée radialement vers l'extérieur par une bande de roulement ;
- au moins une armature de carcasse s'étendant d'un bourrelet à l'autre, en passant par le sommet, et ancrée à au moins une structure de renforcement circonférentiel dans chaque bourrelet, l'armature de carcasse étant constituée d'au moins une nappe caoutchoutée comprenant des renforts s'étendant sensiblement radialement ;
- au moins une zone de jonction par superposition de la nappe sur elle-même, cette zone étant orientée sensiblement radialement ; et
- au moins une bande de recouvrement couvrant une partie d'une zone de jonction, chaque bande de recouvrement étant constituée d'une composition caoutchoutique renforcée par une pluralité de renforts ;
   le procédé comprenant les étapes consistant à :
   - Enrouler la nappe autour du tambour de façon à obtenir un recouvrement des bords de la nappe qui sont parallèles à l'axe du tambour ;
   - Former, sur l'extrémité couvrante de la nappe, une ou plusieurs languettes destinées à former chacune une bande de recouvrement et situées de façon à ce que, après confection du pneumatique, chaque bande de recouvrement couvre une partie d'une zone de jonction et s'étende, vue dans une coupe radiale, entre un point à proximité de l'extrémité axiale de la structure de renforcement du sommet et un point situé radialement à l'intérieur du point axialement le plus à l'extérieur du pneumatique ;
   - Rabattre les languettes en leur faisant subir un pliage le long de la ligne définie par le bord de la nappe duquel elles font saillie.

Dans le procédé selon l'invention, les languettes peuvent être formées avant au après l'enroulement de la nappe sur le tambour.

Comme cela est bien connu de la personne du métier, les nappes utilisées pour constituer des armatures de carcasse sont souvent elles-mêmes formées par un assemblage de plusieurs parties et possèdent des zones de jonction dites « de préparation », à distinguer des zones de jonction « de confection » formées sur le tambour, pendant la confection du pneumatique. Les zones de jonction « de préparation » existent donc avant même que l'armature de carcasse soit formée sur le tambour. Elles peuvent également causer des déformations du flanc, même si, en général, elles sont mieux maîtrisées que les zones de jonction « de confection » ; rien n'empêche que des bandes de recouvrement selon l'invention soient appliquées également sur les zones de jonction « de préparation ».

L'invention sera mieux comprise grâce à la description des dessins selon lesquels :
- la figure 1 représente schématiquement, la vue en coupe d'un pneumatique selon l'art antérieur ;
- la figure 2 représente schématiquement une partie du flanc d'un pneumatique selon l'art antérieur, avant gonflage :
- la figure 3 représente schématiquement une partie du flanc d'un pneumatique selon l'art antérieur, après gonflage :
- la figure 4 représente schématiquement, la vue en coupe d'un pneumatique selon l'invention ;
- la figure 5 représente schématiquement en section la zone de jonction de la nappe de l'armature de carcasse et la bande de recouvrement qui la couvre ;
- la figure 6 montre les valeurs de la déformation du flanc en fonction de la position angulaire sur le flanc ;
- les figures 7 et 8 illustrent un mode de réalisation du procédé selon l'invention ;
- la figure 9 représente schématiquement en section la zone de jonction obtenue avec le procédé représenté dans la figure 8.

### Description de modes de réalisation

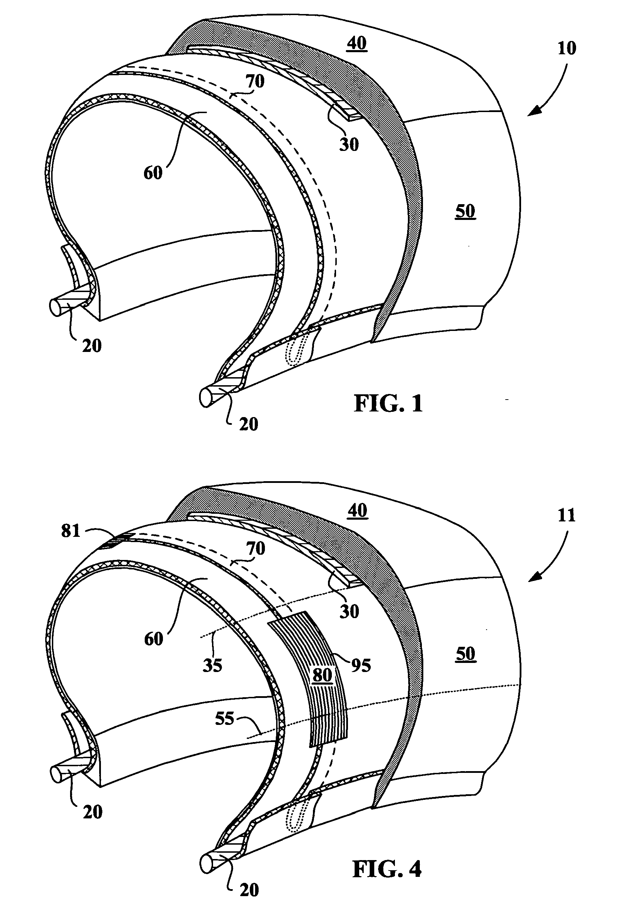

La figure 1 représente un pneumatique 10 selon l'art antérieur comportant des bourrelets contenant chacun une structure de renforcement circonférentiel 20 et un sommet comprenant une structure de renforcement 30 surmontée radialement vers l'extérieur par une bande de roulement 40. De part et d'autre du sommet, un flanc 50 assure la liaison avec chaque bourrelet. Une armature de carcasse 60 s'étend d'un bourrelet à l'autre, en passant par le sommet ; elle est ancrée aux deux structures de renforcement circonférentiel 20 dans chaque bourrelet. L'armature de carcasse 60 est constituée d'au moins une nappe caoutchoutée comprenant des renforts s'étendant sensiblement radialement, c'est-à-dire faisant un angle compris entre 80° et 100° avec la direction circonférentielle. Une zone de jonction 70 est formée par superposition de la nappe sur elle-même, cette zone 70 étant orientée sensiblement radialement.

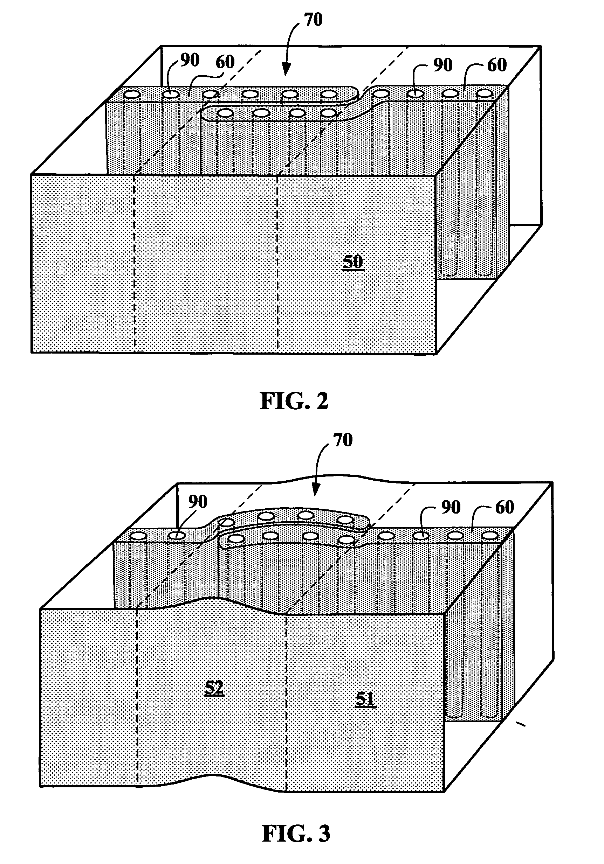

Les figures 2 et 3 illustrent le mécanisme conduisant à la déformation du flanc lors du gonflage d'un pneumatique 10 selon l'art antérieur.

La figure 2 représente schématiquement une partie du flanc d'un pneumatique 10 selon l'art antérieur, avant gonflage. On a représenté l'armature de carcasse 60 comportant des renforts 90. Une partie de la zone de jonction 70 est visible. Lorsque le pneu n'est pas gonflé, le flanc 50 a un aspect régulier.

La figure 3 représente schématiquement la même partie du flanc d'un pneumatique 10 selon l'art antérieur, après gonflage. Sous la contrainte de la pression de gonflage, le pneumatique 10 s'est déformé. Etant donné que le flanc comporte deux fois plus de renforts 90 par surface dans la zone de jonction 70 qu'ailleurs, l'armature de carcasse 60 dans la zone de jonction 70 résiste davantage à la déformation du pneumatique due au gonflage. Le mouvement relatif des différentes parties de l'armature de carcasse 60 résulte en la formation d'une zone de déformation 52 du flanc qui apparaît comme un creux par rapport à la surface du flanc 51 dans les zones éloignées de la zone de jonction 70. L'invention cherche à diminuer ce phénomène. Signalons que les renforts 90 de l'armature de carcasse 60 ont été représentés de façon schématique, dans un but purement illustratif. La position relative des renforts 90 à l'intérieur de l'armature de carcasse 60 avant et après gonflage peut s'éloigner de la configuration représentée.

La figure 4 représente schématiquement la vue en coupe d'un pneumatique 11 selon l'invention. Ce pneumatique 11 diffère du pneumatique 10 selon l'art antérieur en ce que des bandes de recouvrement 80 et 81 comportant des renforts 95 ont été ajoutées ; on voit que la bande de recouvrement 80 couvre la zone de jonction 70 entre (i) un point à proximité de l'extrémité axiale (suggérée par le trait 35 en pointillé) de la structure de renforcement 30 du sommet, et (ii) un point situé radialement à l'intérieur du point axialement le plus à l'extérieur du pneumatique (qui se trouve sur le trait 55 en pointillé). Les renforts de chaque bande de recouvrement (non représentés) ont une orientation sensiblement radiale.

Comme cela ressort bien de la figure 4, dans un pneumatique selon l'invention, la bande de recouvrement 80 s'étend depuis un point à proximité de l'extrémité axiale de la structure de renforcement 30 du sommet qui se trouve « du même coté » que la bande de recouvrement 80 ; la bande de recouvrement 80 ne couvre donc jamais la totalité de la zone de jonction sous la structure de renforcement 30.

Dans l'exemple représenté, la bande de recouvrement 80 se termine sans atteindre l'extrémité axiale (suggérée par le trait 35 en pointillé) de la structure de renforcement 30 du sommet, mais selon d'autres variantes de l'invention, elle peut être en contact avec la structure de renforcement 30 ou s'étendre légèrement sous la structure de renforcement. Les résultats les plus satisfaisants ont été obtenus avec des bandes de recouvrement 80 qui ne s'étendent pas sous la structure de renforcement 30 du sommet. Typiquement, pour un pneumatique de tourisme, l'écart entre la bande de recouvrement 80 et la structure de renforcement 30 est inférieur à 10 mm.

Si la longueur L désigne la distance, dans un plan radial, entre la structure de renforcement circonférentiel 20 et l'extrémité axiale de la structure de renforcement du sommet 30, cette distance étant mesurée le long de la surface de l'armature de carcasse 60, la bande de recouvrement 80 s'étend d'un point situé à une distance de 0.35·L de la structure de renforcement circonférentiel 20 jusqu'à une distance de 0.05·L de l'extrémité de la structure de renforcement du sommet 30.

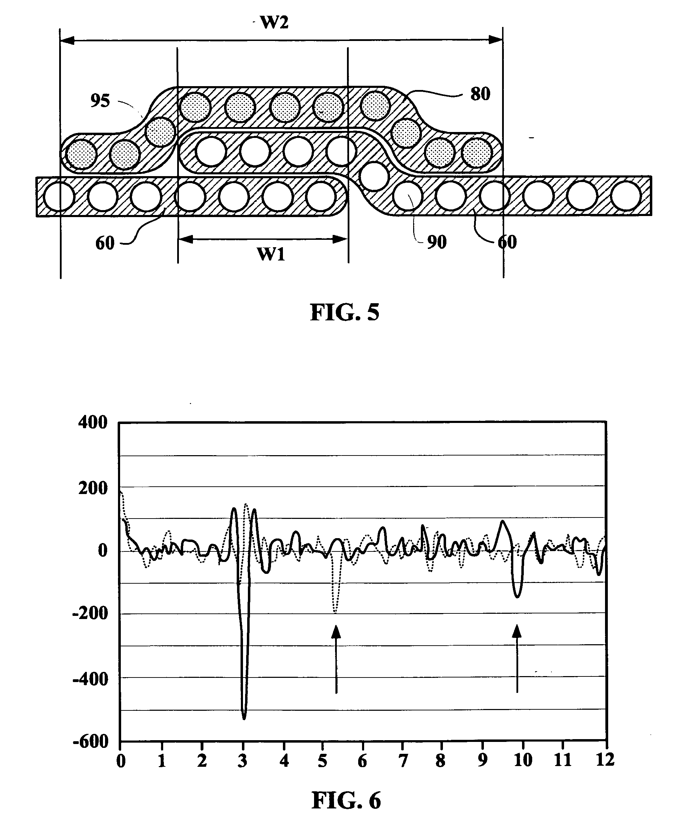

La figure 5 représente schématiquement en section la zone de jonction de l'armature de carcasse 60 (comprenant des renforts 90) et la bande de recouvrement 80 (comprenant des renforts 95) qui la couvre. La largeur W2 de la zone de recouvrement est supérieure à la largeur W1 de la zone de jonction. En l'occurrence, W1 est environ égal à 2.6.W1. La représentation correspond au mode de réalisation préférentiel selon lequel la bande de recouvrement 80 est centrée sur la zone de recouvrement, mais il est également possible de prévoir une bande de recouvrement décentrée.

Une série d'essais comparatifs a été effectuée pour mettre en évidence la déformation du flanc sur un pneumatique selon l'invention « I » et sur différents témoins (« A », « B », « C »). Le tableau suivant résume les résultats pour trois solutions testées ; on a choisi une dimension avec une hauteur de flanc visible importante pour se mettre dans des conditions pénalisantes en termes de déformation du flanc :

| Variante | Pneumatiques de dimension 145/80 R13 |
|---|---|
| « A » | Aucune bande de recouvrement |
| « B » | Bande de recouvrement sur toute la longueur de la zone de jonction (longueur : 220 mm) |
| « I » | Bande de recouvrement selon l'invention (longueur : 50 mm) |

Les résultats (moyennes obtenues sur plusieurs pneumatiques sans zones de jonction « de préparation ») sont résumés dans le tableau suivant :

| Variante | Déformation en bosse [µ] | Déformation en creux [µ] | Déformation creux-bosse [µ] |
|---|---|---|---|
| « A » | 145 | 337 | 457 |
| « B » | 135 | 402 | 506 |
| «I » | 135 | 166 | 283 |

Ces résultats reflètent la très nette réduction de la déformation du flanc en creux obtenue avec le pneumatique selon l'invention.

La figure 6 montre les valeurs de la déformation du flanc en fonction de la position angulaire sur le flanc pour les variantes « A » (trait plein) et « I » (en pointillé). Contrairement aux valeurs données plus haut, ces courbes ont été obtenues sur des pneumatiques ayant des zones de jonction « de préparation » ; leurs emplacements sont signalés par des flèches.

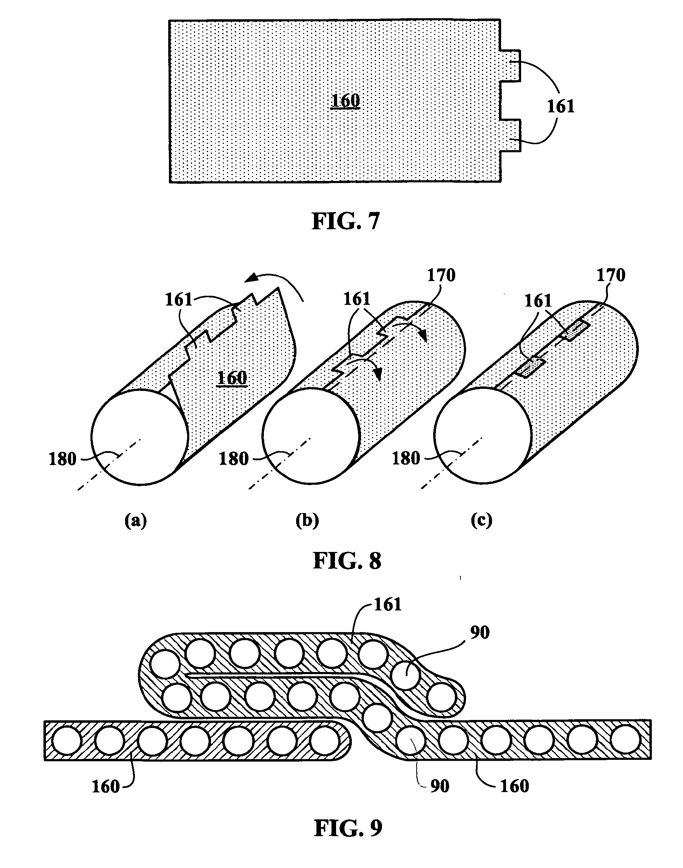

Les figures 7 et 8 illustrent un mode de réalisation du procédé selon l'invention.

La figure 7 représente schématiquement une nappe 160 ayant deux languettes 161. Bien entendu, la taille des languettes a été exagérée de façon a mieux illustrer le principe du procédé selon l'invention.

La figure 8 représente deux étapes du procédé selon l'invention.

Dans un premier temps (figure 8(a)), la nappe 160 destinée à former l'armature de carcasse est enroulée autour d'un tambour (non représenté) de façon à obtenir un recouvrement 170 des bords de la nappe qui sont parallèles à l'axe 180 du tambour.

Ensuite (figure 8(b)), on rabat les languettes 161 en leur faisant subir un pliage le long de la ligne définie par le bord de la nappe 160 duquel elles font saillie.

Ainsi on obtient une nappe de carcasse avec une zone de jonction pourvue de bandes de recouvrement, comme représenté dans la figure 8(c).

La figure 9 représente schématiquement en section la zone de jonction obtenue, la languette 161 rabattue formant une bande de recouvrement.

On n'est pas obligé d'utiliser une nappe prédécoupée comme celle de la figure 7. La personne du métier comprend que la découpe peut se faire lorsque la nappe a été enroulée autour du tambour de confection.

## Revendications

1. Pneumatique (11) comprenant
• des bourrelets contenant chacun au moins une structure de renforcement circonférentiel (20) ;
• un sommet comprenant une structure de renforcement (30) surmontée radialement vers l'extérieur par une bande de roulement (40) ;
• de part et d'autre du sommet, un flanc (50) assurant la liaison avec chaque bourrelet ;
• au moins une armature de carcasse (60) s'étendant d'un bourrelet à l'autre, en passant par le sommet, et ancrée à au moins une structure de renforcement circonférentiel (20) dans chaque bourrelet, l'armature de carcasse (60) étant constituée d'au moins une nappe caoutchoutée comprenant des renforts s'étendant sensiblement radialement, c'est-à-dire faisant un angle compris entre 80° et 100° avec la direction circonférentielle ;
• au moins une zone de jonction (70) par superposition de la nappe sur elle-même, cette zone (70) étant orientée sensiblement radialement ;
• au moins une bande de recouvrement (80, 81) couvrant une partie d'une zone de jonction (70), chaque bande de recouvrement (80,81) étant constituée d'une composition caoutchoutique renforcée par une pluralité de renforts (95),
• les renforts (95) de chaque bande de recouvrement (80, 81) ayant une orientation sensiblement radiale ;
le pneumatique (11) étant **caractérisé en ce que**, vue en coupe radiale, chaque bande de recouvrement (80, 81) s'étend entre
- un point à proximité de l'extrémité axiale de la structure de renforcement (30) du sommet et
- un point situé radialement à l'intérieur du point axialement le plus à l'extérieur du pneumatique (11).

2. Pneumatique selon la revendication 1, **caractérisé en ce que** la largeur de chaque bande de recouvrement (80,81), mesurée dans la direction circonférentielle, est supérieure à la largeur la plus grande de la zone de jonction (70) dans sa partie couverte par ladite bande de recouvrement (80, 81).

3. Pneumatique selon l'une des revendications 1 à 2, **caractérisé en ce que** la largeur de chaque bande de recouvrement (80,81), mesurée dans la direction circonférentielle, est inférieure à quatre fois la largeur la plus grande de la zone de jonction (70) dans sa partie couverte par ladite bande de recouvrement (80, 81).

4. Pneumatique selon l'une des revendications 1 à 3, **caractérisé en ce que** l'épaisseur de chaque bande de recouvrement (80, 81) sur pneu moulé est comprise entre 0.6 et 1.5 mm.

5. Pneumatique selon l'une des revendications 1 à 4, **caractérisé en ce qu'**au moins une bande de recouvrement (80, 81) a la même constitution qu'au moins une nappe de l'armature de carcasse (60).

6. Procédé de fabrication d'un pneumatique (11) sur un tambour, le pneumatique (11) comprenant :
• des bourrelets contenant chacun au moins une structure de renforcement circonférentiel (20) ;
• un sommet comprenant une structure de renforcement (30) surmontée radialement vers l'extérieur par une bande de roulement (40) ;
• au moins une armature de carcasse (60) s'étendant d'un bourrelet à l'autre, en passant par le sommet, et ancrée à au moins une structure de renforcement circonférentiel (20) dans chaque bourrelet, l'armature de carcasse (60) étant constituée d'au moins une nappe caoutchoutée (160) comprenant des renforts s'étendant sensiblement radialement ;
• au moins une zone de jonction (70) par superposition de la nappe sur elle-même, cette zone (70) étant orientée sensiblement radialement ; et
• au moins une bande de recouvrement (80, 81) couvrant une partie d'une zone de jonction (70), chaque bande de recouvrement (80, 81) étant constituée d'une composition caoutchoutique renforcée par une pluralité de renforts (95) ; le procédé comprenant les étapes consistant à :
• Enrouler la nappe (160) autour du tambour de façon à obtenir un recouvrement (170) des bords de la nappe (160) qui sont parallèles à l'axe (180) du tambour ;
• Former, sur l'extrémité couvrante de la nappe, une ou plusieurs languettes (161) destinées à former chacune une bande de recouvrement (80, 81) et situées de façon à ce que, après confection du pneumatique, chaque bande de recouvrement (80, 81) couvre une partie d'une zone de jonction (70) et s'étende, vue dans une coupe radiale, entre un point à proximité de l'extrémité axiale de la structure de renforcement (30) du sommet et un point situé radialement à l'intérieur du point axialement le plus à l'extérieur du pneumatique (11) ;
• Rabattre les languettes (161) en leur faisant subir un pliage le long de la ligne définie par le bord de la nappe duquel elles font saillie.

7. Procédé selon la revendication 6, **caractérisé en ce que** les languettes (161) sont formées avant l'enroulement de la nappe (160) sur le tambour.

## Claims

1. A tyre (11) comprising
• beads each containing at least one circumferential reinforcement structure (20);
• a crown comprising a reinforcement structure (30) surmounted radially towards the outside by a tread (40);
• on either side of the crown, a sidewall (50) providing the connection to each bead;
• at least one carcass reinforcement (60) extending from one bead to the other, passing through the crown, and anchored to at least one circumferential reinforcement structure (20) within each bead, the carcass reinforcement (60) being formed of at least one rubberised ply comprising reinforcing threads extending substantially radially, that is to say forming an angle of between 80° and 100° with the circumferential direction;
• at least one junction zone (70) formed by superposition of the ply on itself, this zone (70) being oriented substantially radially;
• at least one cover strip (80, 81) covering part of a junction zone (70), each cover strip (80, 81) being formed of a rubber composition reinforced by a plurality of reinforcing threads (95),
• the reinforcing threads (95) of each cover strip (80, 81) having a substantially radial orientation;
the tyre (11) being **characterised in that**, viewed in radial section, each cover strip (80, 81) extends between
- a point close to the axial end of the reinforcement structure (30) of the crown and
- a point located radially to the inside of the axially outermost point of the tyre (11).

2. A tyre according to Claim 1, **characterised in that** the width of each cover strip (80, 81), measured in the circumferential direction, is greater than the greatest width of the junction zone (70) in its part covered by said cover strip (80, 81).

3. A tyre according to one of Claims 1 to 2, **characterised in that** the width of each cover strip (80, 81), measured in the circumferential direction, is less than four times the greatest width of the junction zone (70) in its part covered by said cover strip (80, 81).

4. A tyre according to one of Claims 1 to 3, **characterised in that** the thickness of each cover strip (80, 81) on the moulded tyre is between 0.6 and 1.5 mm.

5. A tyre according to one of Claims 1 to 4, **characterised in that** at least one cover strip (80, 81) has the same constitution as at least one ply of the carcass reinforcement (60).

6. A process for manufacturing a tyre (11) on a drum, the tyre (11) comprising:
• beads each containing at least one circumferential reinforcement structure (20);
• a crown comprising a reinforcement structure (30) surmounted radially towards the outside by a tread (40);
• at least one carcass reinforcement (60) extending from one bead to the other, passing through the crown, and anchored to at least one circumferential reinforcement structure (20) within each bead, the carcass reinforcement (60) being formed of at least one rubberised ply (160) comprising reinforcing threads extending substantially radially;
• at least one junction zone (70) formed by superposition of the ply on itself, this zone (70) being oriented substantially radially; and
• at least one cover strip (80, 81) covering part of a junction zone (70), each cover strip (80, 81) being formed of a rubber composition reinforced by a plurality of reinforcing threads (95);
the process comprising the stages consisting of:
• Winding the ply (160) around the drum so as to obtain covering (170) of the edges of the ply (160) which are parallel to the axis (180) of the drum;
• Forming, on the covering end of the ply, one or more tabs (161) each intended to form a cover strip (80, 81) and located such that, after building of the tyre, each cover strip (80, 81) covers part of a junction zone (70) and extends, viewed in radial section, between a point close to the axial end of the reinforcement structure (30) of the crown and a point located radially to the inside of the axially outermost point of the tyre (11);
• Folding the tabs (161) over by folding them along the line defined by the edge of the ply from which they project.

7. A process according to Claim 6, **characterised in that** the tabs (161) are formed before the ply (160) is wound on the drum.

## Patentansprüche

1. Luftreifen (11), der aufweist
• Wülste, die je mindestens eine Umfangsverstärkungsstruktur (20) enthalten;
• einen Scheitel, der eine Verstärkungsstruktur (30) aufweist, über der radial nach außen eine Lauffläche (40) liegt;
• zu beiden Seiten des Scheitels eine Flanke (50), die die Verbindung mit jedem Wulst gewährleistet;
• mindestens eine Karkassenbewehrung (60), die sich von einem Wulst zum anderen erstreckt, indem sie über den Scheitel verläuft, und an mindestens einer Umfangsverstärkungsstruktur (20) in jedem Wulst verankert ist, wobei die Karkassenbewehrung (60) aus mindestens einer gummierten Lage mit im Wesentlichen radial verlaufenden Verstärkungen besteht, d.h. die einen Winkel zwischen 80° und 100° mit der Umfangsrichtung bilden;
• mindestens eine Verbindungszone (70) durch Überlagerung der Lage auf sich selbst, wobei diese Zone (70) im Wesentlichen radial ausgerichtet ist;
• mindestens ein Überdeckungsband (80, 81), das einen Teil einer Verbindungszone (70) bedeckt, wobei jedes Überdeckungsband (80, 81) aus einer Kautschukzusammensetzung besteht, die von mehreren Verstärkungen (95) verstärkt wird,
• wobei die Verstärkungen (95) jedes Überdeckungsbands (80, 81) eine im Wesentlichen radiale Ausrichtung haben;
wobei der Luftreifen (11) **dadurch gekennzeichnet ist, dass** im radialen Schnitt gesehen jedes Überdeckungsband (80, 81) sich erstreckt zwischen
- einem Punkt in der Nähe des axialen Endes der Verstärkungsstruktur (30) des Scheitels, und
- einem Punkt, der sich bezüglich des axial am weitesten außen liegenden Punkts des Luftreifens (11) radial innen befindet.

2. Luftreifen nach Anspruch 1, **dadurch gekennzeichnet, dass** die Breite jedes Überdeckungsbands (80, 81), gemessen in Umfangsrichtung, größer ist als die größte Breite der Verbindungszone (70) in ihrem von dem Überdeckungsband (80, 81) bedeckten Bereich.

3. Luftreifen nach einem der Ansprüche 1 bis 2, **dadurch gekennzeichnet, dass** die Breite jedes Überdeckungsbands (80, 81), gemessen in Umfangsrichtung, geringer ist als das Vierfache der größten Breite der Verbindungszone (70) in ihrem von dem Überdeckungsband (80, 81) bedeckten Bereich.

4. Luftreifen nach einem der Ansprüche 1 bis 3, **dadurch gekennzeichnet, dass** die Dicke jedes Überdeckungsbands (80, 81) auf dem geformten Luftreifen zwischen 0,6 und 1,5 mm liegt.

5. Luftreifen nach einem der Ansprüche 1 bis 4, **dadurch gekennzeichnet, dass** mindestens ein Überdeckungsband (80, 81) den gleichen Aufbau hat wie mindestens eine Lage der Karkassenbewehrung (60).

6. Verfahren zur Herstellung eines Luftreifens (11) auf einer Trommel, wobei der Luftreifen (11) aufweist:
• Wülste, die je mindestens eine Umfangsverstärkungsstruktur (20) enthalten;
• einen Scheitel, der eine Verstärkungsstruktur (30) aufweist, über der radial nach außen eine Lauffläche (40) liegt;
• mindestens eine Karkassenbewehrung (60), die sich von einem Wulst zum anderen erstreckt, indem sie über den Scheitel verläuft, und an mindestens einer Umfangsverstärkungsstruktur (20) in jedem Wulst verankert ist, wobei die Karkassenbewehrung (60) aus mindestens einer gummierten Lage (160) besteht, die im Wesentlichen radial verlaufende Verstärkungen aufweist;
• mindestens eine Verbindungszone (70) durch Überlagerung der Lage auf sich selbst, wobei diese Zone (70) im Wesentlichen radial ausgerichtet ist; und
• mindestens ein Überdeckungsband (80, 81), das einen Teil einer Verbindungszone (70) bedeckt, wobei jedes Überdeckungsband (80, 81) aus einer Kautschukzusammensetzung besteht, die von mehreren Verstärkungen (95) verstärkt wird;
wobei das Verfahren Schritte aufweist, die darin bestehen:
• die Lage (160) so um die Trommel zu wickeln, dass eine Überdeckung (170) der Ränder der Lage (160) erhalten wird, die parallel zur Achse (180) der Trommel liegen;
• an dem bedeckenden Ende der Lage eine oder mehrere Zungen (161) zu formen, die dazu bestimmt sind, je ein Überdeckungsband (80, 81) zu bilden, und die so angeordnet sind, dass nach der Konfektionierung des Luftreifens jedes Überdeckungsband (80, 81) einen Teil einer Verbindungszone (70) bedeckt und sich im radialen Schnitt gesehen zwischen einem Punkt in der Nähe des axialen Endes der Verstärkungsstruktur (30) des Scheitels und einem Punkt erstreckt, der sich bezüglich des axial am weitesten außen liegenden Punkts des Luftreifens (11) radial innen befindet;
• die Zungen (161) umzuschlagen, indem sie entlang der Linie umgefaltet werden, die von dem Rand der Lage definiert wird, von der aus sie vorstehen.

7. Verfahren nach Anspruch 6, **dadurch gekennzeichnet, dass** die Zungen (161) vor dem Aufwickeln der Lage (160) auf die Trommel geformt werden.
